(19) Europäisches Patentamt
European Patent Office
Office européen des brevets

(11) EP 0 924 505 A2

(12) EUROPÄISCHE PATENTANMELDUNG

(43) Veröffentlichungstag:
23.06.1999 Patentblatt 1999/25

(51) Int. Cl.⁶: G01N 13/02

(21) Anmeldenummer: 98123561.7

(22) Anmeldetag: 10.12.1998

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 12.12.1997 DE 19755291

(71) Anmelder: Sita Messtechnik GmbH
01217 Dresden (DE)

(72) Erfinder: Böttger, Axel Dr.-Ing.
01309 Dresden (DE)

(74) Vertreter:
Ilberg, Roland W., Dipl.-Ing. et al
Ilberg - Weissfloh Patentanwälte,
Am Weissiger Bach 93
01474 Schonfeld-Weissig (DE)

(54) **Verfahren und Einrichtungen zum Bestimmen und Einstellen der dynamischen Oberflächenspannung von Flüssigkeiten**

(57)    Die Erfindung bezieht sich auf ein Verfahren und eine Einrichtung zum Bestimmen und Einstellen der dynamischen Oberflächenspannung von Flüssigkeiten nach der Blasendruckmethode, wobei der zeitliche Verlauf des Blasendrucks $p(t_{life})$ und der zeitliche Verlauf des Blasenradius $R(t_{life})$ einer einzelnen Blase Bl zwecks Ermittlung der Oberflächenspannung $\sigma_s(t_{life})$ in Abhängigkeit der Blasenlebensdauer $(t_{life})$ ausgewertet werden.

Fig. 3

**Beschreibung**

Die vorliegende Erfindung bezieht sich auf Verfahren und Einrichtungen zum Bestimmen oder Bestimmen und Einstellen der dynamischen Oberflächenspannung bzw. der Konzentration von Flüssigkeiten mit oberflächenaktiven Substanzen nach dem Blasendruckverfahren.

Ein Anwendungsfeld ist z.B. die online-Diagnose und oberflächenspannungsabhängige online-Dosierung von Waschlaugen oder Spülwässern, ein anderes die Herstellung und Qualitätssicherung von tensidhaltigen Tinten, Farben, Reinigungsmitteln, Emulsionen, Wischwässern. Unter anderem lassen sich mit der erfindungsgemäßen Vorrichtung auch sehr gut pestizide, photochemische, galvanische und pharmazeutische Lösungen, Flüssigkeiten in Wasseraufbereitungsanlagen sowie kohlenwasserstoffhaltige - beispielsweise alkoholhaltige - Flüssigkeiten diagnostizieren.

Es sind Blasendruckverfahren bekannt, bei denen aus dem Druckmaximum $p_{max}$ (Firmendruckschrift Blasendrucktensiometer BP2, Benutzerhandbuch, Krüss GmbH, Hamburg 1995), dem Druckmaximum und dem hydrostatischen Druck $p_{max} - p_{stat}$ (DE 30 26 242, DE 41 12 417), dem Druckmaximum und dem Druckminimum $p_{max} - p_{min}$ (DE 43 03 133 A1) oder der maximalen Druckänderung $|dp/dt|_{max}$ (DE 19 529 787 A1) die Oberflächenspannung $\sigma_s$ bestimmt wird. Aus:

$$\sigma_s = \Delta p \cdot R_{cap}/2 \qquad R_{cap}: \text{Radius der Kapillare} \qquad (1)$$

ergibt sich jeweils die Oberflächenspannung mit Differenzdruck:

$$\Delta p = p_{max} - d \cdot g \cdot h \text{ (d: gemessene Dichte der Flüssigkeit;}$$
$$\text{g: Gravitationskonstante; h: gemessene Eintauchtiefe der Kapillare,)} \qquad (2)$$

$$\Delta p = p_{max} - p_{stat} \text{ (hydrostatischer Druck z.B. mit Zweitkapillare gemessen)} \qquad (3)$$

$$\Delta p = p_{max} - p_{min} \text{ (Differenzdruck gemessen).} \qquad (4)$$

Zur Analyse oberflächenaktiver Flüssigkeiten wird jeweils die dynamische Oberflächenspannung genutzt. Diese ändert sich entsprechend der oberflächenaktiven Substanzen je nach Lebensalter der Oberfläche. Bei allen bekannten Verfahren, die auf der Grundlage des Blasendruckverfahrens arbeiten, läßt sich die Abhängigkeit der Oberflächenspannung $\sigma_s$ von der Lebensdauer der Oberfläche bzw. von der Blasenlebensdauer nur dann ermitteln, wenn man die Blasenfrequenz schrittweise oder kontinuierlich verändert. Dies ist jedoch relativ zeitaufwendig, so daß eine Messung mehrere Minuten dauert. Eine online-Messung der dynamischen Oberflächenspannung in Abhängigkeit vom Alter der Grenzfläche ist damit nicht möglich, da bereits während der notwendigen Meßzeit sich die Eigenschaften und Zustände der Flüssigkeit erheblich verändern können, man denke nur an eine Dosierphase.

Des weiteren bestehen systematische Fehlereinflüsse aufgrund der Viskosität der Flüssigkeit, die sich mit zunehmender Blasenfrequenz überproportional verstärken.

Ebenso ist die Kalibrierung des Meßsystems relativ zeitaufwendig, wenn sie nach den bekannten Verfahren mit einer Flüssigkeit bekannter Oberflächenspannung durchgeführt werden sollte.

Auch entstehen Meßfehler durch Temperaturunterschiede zwischen der Temperatur der Prozeßflüssigkeit und der Temperatur des zum Ausbilden der Blase genutzten Gases. Ist dieser Temperaturunterschied relativ groß, so entsteht einerseits Kondensat in der Kapillare, wenn die Temperatur der Flüssigkeit kleiner als die Gastemperatur ist und andererseits kommt es zu einer lokalen Abkühlung der Kapillare und somit der Grenzfläche und es entstehen systematische Meßfehler, die zudem noch von der Blasengeschwindigkeit und Blasenfrequenz beeinflußt werden.

Ein weiteres Problem entsteht beim zielgerichteten online-Dosieren von Flüssigkeitszusätzen unter Nutzung der Oberflächenspannungsmessung. Jeder Zusatz besitzt charakteristische Einflüsse und verändert die Oberflächenspannungs-Konzentrationskennlinie. Werden mehrere Stoffzusätze benutzt, hat dies ebenfalls Einfluß auf die Konzentrationskennlinie. Für das zielgerichtete Dosieren von Flüssigkeiten müssen deshalb bisher die speziellen Konzentrationskennlinien bekannt sein. Diese erhält man z.B. mittels Laborversuchen, aus denen sich die Oberflächenspannungs-Sollwerte bestimmen lassen (DE 43 03 133 A1). Derartige Laborversuche sind jedoch aufwendig und müssen für jede Stoffänderung erneut durchgeführt werden.

Zwar ist es schon bekannt, eine frische und genau dosierte Flüssigkeit, deren Oberflächenspannung man unmittelbar vor dem Messen in der Prozeßflüssigkeit bestimmt, als Vergleichsnormal zu benutzen (DE 43 00 514 A1). Dieses Verfahren erlaubt jedoch keine genaue Bestimmung des Konzentrationsunterschiedes, da die Konzentrationskennlinie nicht bekannt ist. Bei diesem Verfahren existiert kein Algorithmus, anhand dessen man die notwendige Dosiermenge quantitativ bestimmen könnte.

Die automatische Messung der Oberflächenspannung ist derzeit nicht Stand der Technik, da Umgebungsbedingungen, Drifterscheinungen, Verschmutzungserscheinungen u.a. starken Einfluß auf die Meßergebnisse nehmen. Bekannt ist zwar eine Durchflußzelle nach DE 19603386 A1, die jedoch nicht, bedingt durch ihre Gestaltung, die einzelnen Teilaufgaben erfüllen kann. Vom Anmelder vorgeschlagen wurde auch schon eine Reinigungseinrichtung, die sich jedoch nur auf die Reinigung einer Kapillare beschränkt (DE 196 53 752 A1).

Problematisch ist auch das Messen der Oberflächenspannung z.B. durch den Vergleich zweier Flüssigkeiten. Um aussagekräftige Meßergebnisse zu erhalten, müssen die Temperaturen annähernd gleich sein. Bekannt sind zwar Meßzellen entsprechend DE 195 29 787 mit einer mechanischen Reinigungseinrichtung und einem Heizelement, mit dem die Temperatur der Flüssigkeitsprobe geregelt wird. Diese Temperaturregelung vor jedem Messen ist jedoch sehr zeitaufwendig und verlängert den Meßprozeß erheblich.

Flüssigkeitsschwingungen beeinträchtigen das Ausbilden der Blasen an der Kapillare und können die Meßsignale (Drucksignal!) verfälschen. Eine Einrichtung zur Lösung dieses Problems ist aus der DE 196 03 386 A1 in Form einer Durchflußzelle bekannt. Hierbei taucht die Kapillare waagerecht in die Flüssigkeit. Eine Prallplatte reduziert die Strömungen, die durch Zufuhr der Flüssigkeit entstehen könnten. Aufgrund dieser Anordnung besteht jedoch mit hoher Wahrscheinlichkeit die Gefahr, daß sich Schmutzpartikel an den entsprechenden Teilen in Nähe der Kapillare festsetzen und dadurch das Meßergebnis verfälschen. Eine Reinigung der Meßzelle ist nicht direkt möglich, da ihr Aufbau den Zugang zu den kritischen Stellen verhindert.

Bekannte Kapillaren aus fluoriertem Polymerplastik (US 38 81 344), Glas oder Edelstahl weisen stärkere bis sehr starke Drifterscheinungen insbesondere bei Anwendung in wässrigen Lösungen auf, weshalb eine ständige Veränderung der Kapillare mit Meßfehlern von mehreren mN/m zu beobachten ist. Die Ursachen liegen in der Benetzungsfähigkeit, Temperatur, Blasengeschwindigkeit, Viskosität der Flüssigkeit und Verschmutzungsempfindlichkeit. Diese Faktoren lassen sich nicht vorab bestimmen und herausrechnen.

Aufgabe der Erfindung ist es, Verfahren und Einrichtungen zum online-Messen oder online-Messen und -Einstellen der dynamischen Oberflächenspannung zu entwickeln, durch die systematische Fehler der überlagerten physikalischen Effekte, wie Kondensationserscheinungen, lokale Temperaturänderungen, Drifterscheinungen und Verschmutzungen der Kapillare, stark reduziert werden und die innerhalb weniger Sekunden die Meßwerte der dynamischen Oberflächenspannung in Abhängigkeit der Blasenlebensdauer liefern.

Eine weitere Aufgabe ist es, den technischen Aufwand für die Messungen, die Betriebssicherheit sowie die Meßgenauigkeit auch für Prozeßflüssigkeiten, die verschiedenartige Zusätze enthalten, zu verbessern. Die angegebenen Verfahren und Einrichtungen sollen eine Automatisierung der Meßabläufe unterstützen.

Die Aufgaben werden durch die in den Hauptansprüchen angegebenen Merkmale gelöst. Vorteilhafte Weiterentwicklungen geben die begleitenden Unteransprüche an.

Die Erfindung und die mit der Erfindung erzielten Vorteile sollen anhand von Ausführungsbeispielen näher erläutert werden. In der zugehörigen Zeichnung zeigen hierzu:

Fig. 1:     den Differenzdruck $\Delta p$ einer einzelnen Blase über der Zeit,
Fig. 2:     den Blasenradius einer Blase über der Zeit,
Fig. 3:     eine an einer Kapillare austretende Blase,
Fig. 4:     das Blasenvolumen einer Blase über der Zeit,
Fig. 5:     die Oberflächenspannungs-Konzentrationskennlinie einer Prozeß- und einer Normflüssigkeit;
Fig. 6:     die normierten Kennlinien nach Fig. 5
Fig. 7:     ein Diagramm zur Dosierung nach der Oberflächenspannung;
Fig. 8:     eine Einrichtung zur Dämpfung der Umgebungsschwingungen.

Nach der Erfindung werden die zeitlichen Verläufe des Blasendrucks $p(t_{life})$ und des Blasenradius $R(t_{life})$ einer einzelnen Blase in Abhängigkeit ihrer Blasenlebensdauer $t_{life}$ (Blasenfrequenz f ca. 1 Hz) ausgewertet. Hierdurch läßt sich die Oberflächenspannung $\sigma_s(t_{life})$ nach (1) bestimmen zu:

$$\sigma_s(t_{life}) = \Delta p(t_{life}) \cdot R(t_{life})/2 \qquad (5)$$

mit Differenzdruck:

$$\Delta p(t_{life}) = p(t_{life}) - p_{min}. \qquad (6)$$

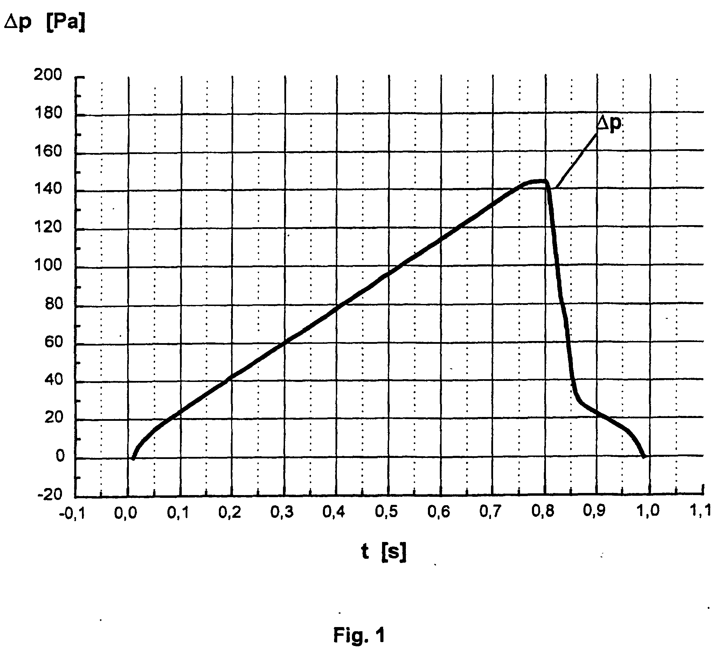

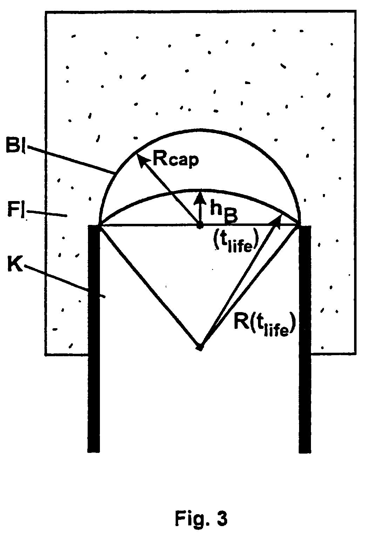

Im Diagramm nach Fig. 1 ist dargestellt, wie sich der Differenzdruck $\Delta p$ beim Aufbau einer Blase Bl (s. Fig. 3) bei einer Blasenfrequenz von f = 1 Hz verhält. Der Differenzdruck $\Delta p(t_{life})$ nimmt bis zu einem Maximalwert, der jedoch als solcher nicht weiter interessiert, annähernd linear zu und bricht mit weiterer Vergrößerung der Blase Bl bis zum Ablösen von der Kapillare K schnell zusammen. Er läßt sich an jeder beliebigen Stelle der (aufsteigenden) Kurve relativ einfach mittels einer Druckmessung $p(t_{life})$ des der Kapillare K zugeführten Gases unter Berücksichtigung des auf die Kapillare K wirkenden Gegendruckes $p_{min}$ bestimmen.

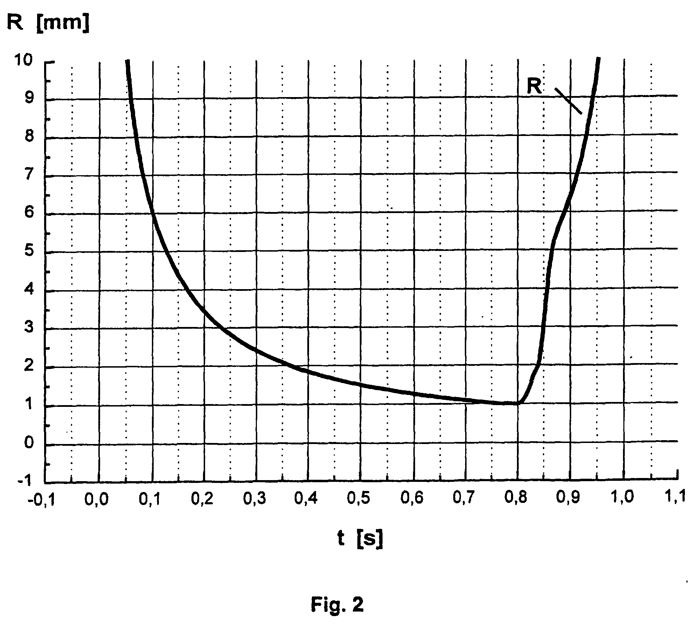

Das Diagramm nach Fig. 2 zeigt für sich allein die Abhängigkeit des Blasenradius $R(t_{life})$ von der Zeit. In einer Zusammenschau mit Fig. 1 wird ablesbar, wie sich in Abhängigkeit des Differenzdrucks $\Delta p(t_{life})$ der Blasenradius $R(t_{life})$ verhält. Bei einem Differenzdruck $\Delta p(t_{life}) = 0$ ist der Blasenradius $R(t_{life})$ relativ groß, d.h., die Blase Bl (Fig. 3) hat eine nur leicht gewölbte, konvexe Oberfläche. Mit ansteigendem Blasendruck $p(t_{life})$, also mit Vergößerung des Differenzdrucks $\Delta p(t_{life})$, verkürzt sich der Blasenradius $R(t_{life})$, die Blase Bl entwickelt sich. Zum Zeitpunkt des maximalen Differenzdrucks $\Delta p(t_{life})$ ist der Blasenradius am kleinsten, die Blase Bl besitzt ihre größte Wölbung. Sie bildet eine Halbkugel mit annähernd dem Radius der Kapillare K. Mit weiterer Erhöhung des Blasendrucks $p(t_{life})$ entartet die Blase Bl über der Kapillare K und löst sich von ihr ab, wobei der Differenzdruck $\Delta p(t_{life})$ schnell auf 0 sinkt.

In Fig. 3 ist schematisch eine aus einer Kapillare K mit dem Radius $R_{cap}$ in eine Meßflüssigkeit Fl austretende Blase Bl dargestellt. Zum Ermitteln des Verlaufs des Blasenradius $R(t_{life})$ sind bei bekanntem Radius $R_{cap}$ der Kapillare folgende indirekte Meßverfahren anwendbar:

a) indirekte Messung des Verlaufs des Blasenradius $R(t_{life})$ aus dem Verlauf der Höhe $h_B(t_{life})$ der gebildeten Blase:

$$R(t_{life}) = R^2_{cap}/2 \cdot h_B(t_{life}) + h_B(t_{life})/2 \tag{7}$$

b) indirekte Messung des Verlaufs des Blasenradius durch Messen des Verlaufs des Blasenvolumens $V(t_{life})$:

$$V(t_{life}) = 2/3 \cdot \pi \cdot R(t_{life}) \cdot \{R(t_{life}) - \sqrt{R(t_{life})^2 - R^2_{cap}}\} \tag{8}$$

c) indirekte Messung des Verlaufs des Blasenradius $R(t_{life})$ durch Messen des Verlaufs des Gasvolumenstromes dV/dt und Berechnen des Verlaufs des Blasenvolumens $V(t_{life})$ und des Verlaufs des Blasenradius $R(t_{life})$ aus:

$$dV(t_{life})/dt = d\{2/3 \cdot \pi \cdot R(t_{life}[R(t_{life})/dt - \sqrt{R(t_{life})^2 - R^2_{cap}}]\}/dt \tag{9}$$

mit:

$$V(t_{life}) = V(R_{cap}) + \left| \int_{t_{(life)}}^{t=t(R_{cap})} V(t_{life}) \cdot dt \right| \tag{10}$$

mit:

$$V(R_{cap}) = 2/3 \cdot \pi \cdot R^3_{cap} \tag{11}$$

und weitere Berechnung nach b).

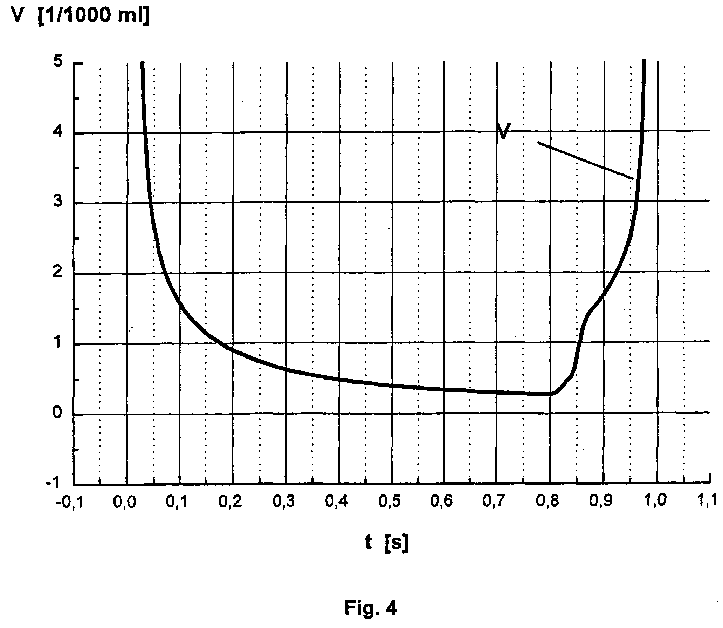

Die Figuren Fig. 2 und Fig. 4 zeigen den Zusammenhang der Verläufe von Blasenradius $R(t_{life})$ und Blasenvolumen $V(t_{life})$ in Diagrammform.

Der Radius $R_{cap}$ der Kapillare wird aus einer Kalibriermessung mit einer Flüssigkeit bekannter Oberflächenspannung, z.B. Wasser und mit einer Blasenfrequenz von z.B. f = 1 Hz bestimmt:

$$R_{cap} = 2 \cdot \sigma_{H2O}(T_{fl}, f=1Hz)/\Delta p_{H2O} \tag{12}$$

$$\Delta p_{H2O} = p_{max} - p_{min}$$

$$T_{fl} = \text{Temperatur der zu messenden Flüssigkeit.}$$

Selbstverständlich kann anstelle der rechnerischen Bestimmung von $R_{cap}$ der beim Kalibrieren erhaltene Meßwert des maximalen Differenzdrucks $\Delta p_{H2O}$ direkt zur Berechnung des Verlaufs des Blasenradius $R(t_{life})$ verwendet werden.

Auch kann der für die Berechnung des Kapillarradius $R_{cap}$ notwendige Differenzdruck $\Delta p_{H2O}$ entsprechend dem Stand der Technik nach den Gleichungen (2), (3) oder (4) bestimmt werden.

Durch das Verfahren wird zusätzlich der Einfluß der Viskosität und vorhandener Unterschiede zwischen der Gas- und Flüsigkeitstemperatur durch eine geringe und konstante Blasenfrequenz von beispielsweise f = 1 Hz deutlich verringert. Ebenso ist eine Regelung der Blasenfrequenz nicht zwingend erforderlich.

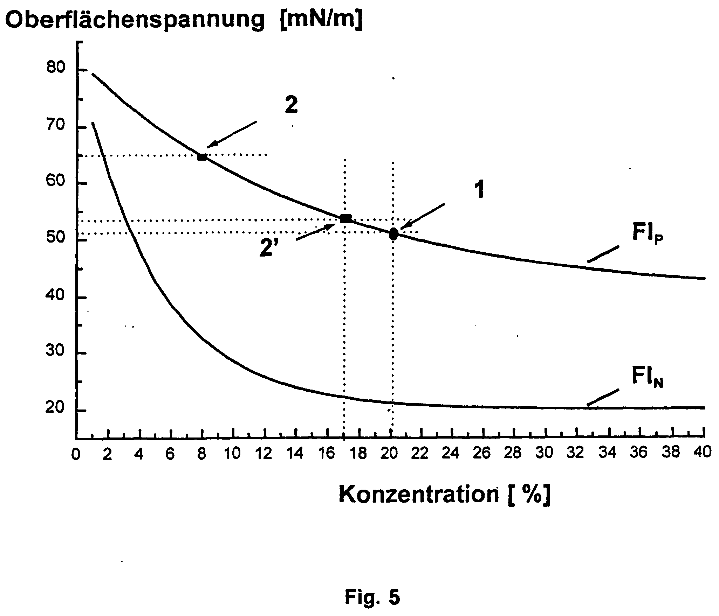

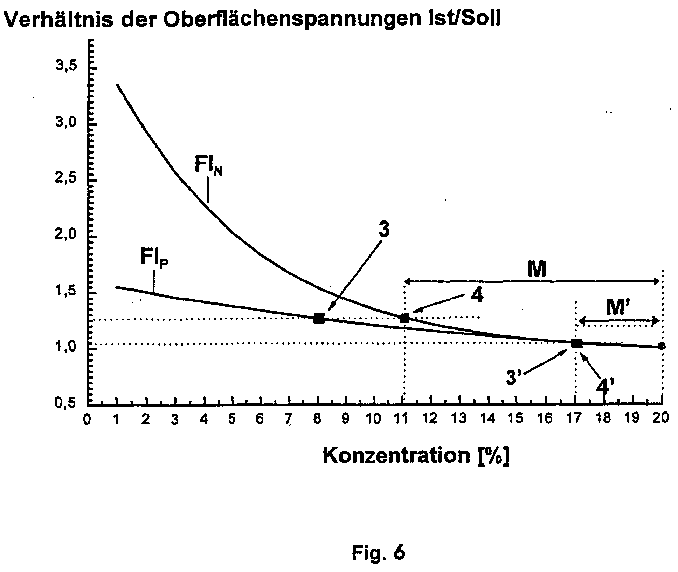

Anhand der Fig. 5 und 6 soll ein Verfahren zur online-Dosierung von Zusätzen in eine Prozeßflüssigkeit näher erläutert werden.

Zum online-Erzeugen einer bestimmten Konzentration eines Stoffes X in einem Prozeß-Flüssigkeitsgemisch $Fl_P$ mit unterschiedlichen oder unbekannten Zusätzen empfiehlt es sich, vorher die (Soll-) Oberflächenspannung einer kleinen Menge frisch angesetzten Lösung zu messen und deren Oberflächenspannungs als Sollwert $\sigma_{soll}$ zu speichern (Punkt 1 der Kennlinie in Fig. 5). Die frisch angesetzte Lösung besteht aus der "unbekannten" Prozeßflüssigkeit $Fl_P$ und der entsprechenden Sollkonzentration des Stoffes X. Danach wird der Verlauf der (Ist-) Oberflächenspannung $\sigma_{ist}$ der Prozeßflüssigkeit $Fl_P$ gemessen (Punkt 2 der Kennlinie in Fig. 5) und diese ins Verhältnis zur Oberflächenspannung des gespeicherten Sollwertes gesetzt (Punkt 3 der Kennlinie in Fig. 6). Mit diesem Verhältnis $\sigma_{ist}/\sigma_{soll}$ bestimmt man aus der normierten Kennlinie einer Normflüssigkeit $Fl_N$ die notwendige Dosiermenge M (Punkt 4 der Kennlinie in Fig. 6). Im Beispiel beträgt der Sollwert = 20%. Die normierte Kennlinie für die Normflüsigkeit $Fl_N$ sollte hierbei oberhalb der normierten Kennlinie für die aktuelle Prozeßflüssigkeit $Fl_P$ liegen. Anschließend wird die Oberflächenspannung der Prozeßflüssigkeit $Fl_P$ erneut gemessen (Punkt 2' der Kennlinie in Fig. 5), das Verhältnis zum Sollwert gebildet (Punkt 3' der Kennlinie in Fig. 6) und eine zweite Dosiermenge M' bestimmt (Punkt 4' der Kennlinie in Fig. 6), die ebenfalls dosiert wird. Dieser Algorithmus wird solange durchgeführt, bis das Verhältnis der Oberflächenspannungen Ist/Soll den Wert 1,0 mit entsprechend festgelegten Toleranzen erreicht. Nur wenige Dosierschritte (ca. 3 bis 5) sind notwendig, um die genaue Konzentration des Stoffes X in der Prozeßflüssigkeit $Fl_P$ einzustellen. Anwendung finden kann diese Verfahren beispielsweise bei der Dosierung von Isopropylalkohol in Feuchtemitteln von Offsetdruckmaschinen.

Andere oberflächenaktive Stoffe werden nicht nach einer vorgegebenen Konzentration dosiert, sondern nach ihrem Vermögen, die Oberflächenspannung zu reduzieren. Zur Lösung dieses Problems ist es sinnvoll, zuerst dieses Vermögen automatisch im Prozeß zu ermitteln, indem einige Punkte - mindestens zwei - der Oberflächenspannungs-Konzentrationskennlinie automatisch gemessen und eine zugehörige Konzentrationsfunktion bestimmt wird. Anschließend läßt sich die genaue Dosiermenge anhand eines Faktors oder Summanden, der mit der Oberflächenspannung bei hoher Stoffkonzentration multipliziert oder addiert wird, bestimmen.

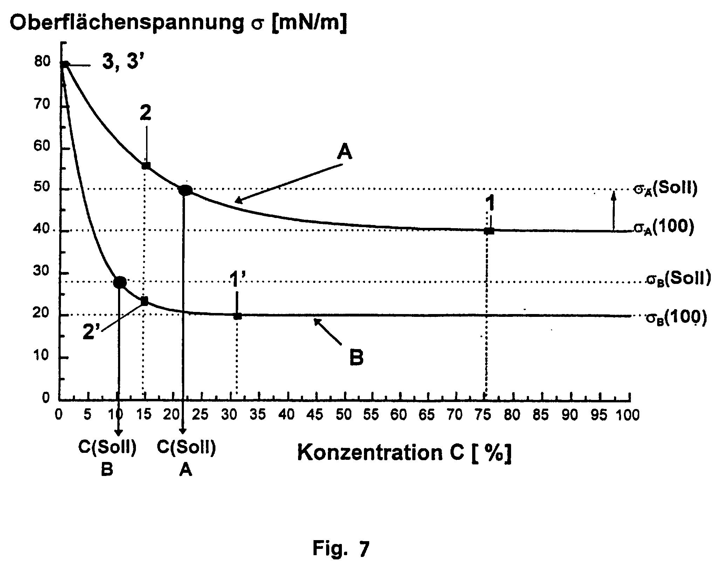

Das Verfahren ist im Diagramm nach Fig. 7 schematisch erläutert. Die Oberflächenspannungen der Prozeßlösungen A, B werden zunächst für verschiedene Konzentrationen automatisch gemessen (Punkte 1, 2, 3 für die Prozeßlösung mit dem Stoff A, Punkte 1', 2', 3' für die Prozeßlösung mit dem Stoff B). Bei hohen Stoffkonzentrationen ändern sich die Oberflächenspannungen der Prozeßlösungen A, B praktisch nicht mehr. Die Kennlinien nähern sich je nach Eigenschaft des dosierten Stoffes asymptotisch den Grenzwerten bereits bei geringerer oder erst bei höherer Konzentration: A(100) bei Konzentration 76%, B(100) bei Konzentration 26%. Aus diesen Grenzwerten werden die Sollwerte $A_{C(Soll)}$ bzw. $B_{C(Soll)}$ durch Multiplikation mit einem Faktor oder Addition eines Summanden bestimmt und anhand dieser Sollwerte die Prozeßlösungen online automatisch dosiert.

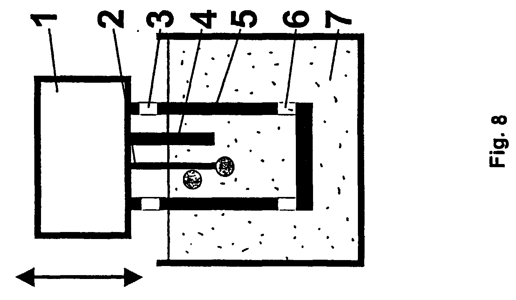

Zur Reduzierung der Umgebungsschwingungen, die das Drucksignal verfälschen würden, ist eine Einrichtung gemäß Fig. 8 vorgesehen. Aus dem Sensorkopf 1 ragt eine Kapillare 2 von oben in eine Meßflüssigkeit 7. Die Kapillare 2 und ggf. ein Temperaturfühler 4 sind von einer Hülle 5 umgeben, die die Schwingungen im Bereich der Flüssigkeitsoberfläche reduziert bzw. fern hält. Die Hülle 5 kann an der Unterseite geschlossen sein und dafür an den Seiten zusätzliche Öffnungen 3 und 6 für das Ein- und Ausströmen der Meßflüssigkeit 7 bzw. der Luft besitzen. Die Einrichtung ist so ausgelegt, daß sie automatisch in die Meßflüssigkeit 7 taucht bzw. einer automatischen Reinigung zugeführt werden kann.

Zur Vermeidung von Kondensationserscheinungen in der Kapillare und zum Reduzieren der lokalen Temperaturänderung an der Kapillare, bedingt durch Temperaturunterschiede zwischen der Meßflüssigkeitstemperatur und der Temperatur des zum Ausbilden der Blasen genutzten Gase, ist die Einrichtung wahlweise mit Kondensationsflächen in der Gaszuführung (z. B. mittels Peltierelement), Trockenmitteln in der Gaszuführung, (z.B. mittels Selicagel), einer Heizung in der Gaszuführung (z. B. mittels Peltierelement, Widerstandsheizung, Heizfolie, beheizte Zuleitung, Erwärmung durch Flüssigkeit) oder einer Kombination dieser Maßnahmen ausgestattet.

Nach umfangreichen Untersuchungen wurde herausgefunden, daß sich als Material für die Kapillare in besonderer Weise Polyether-Etherketon (PEEK) eignet. Kapillaren aus diesem Material besitzen sehr geringe Drifterscheinungen von <1mN/m.

Zweckmäßigerweise temperieren sich zu vergleichende Flüssigkeiten gegenseitig, indem ein Flüssigkeitsbehälter sich in dem anderen befindet, wobei eine der beiden Flüssigkeiten zum Kalibrieren der Meßeinrichtung verwendet wird.

Der Probenbehälter kann hierzu auch zwei oder mehrere Kammern besitzen, von denen eine auch eine Reinigungskammer sein kann.

Die Kapillare 2 kann in weiterer Ausbildung relativ zu jeder Kammer (Probenkammer, Reinigungskammer) selbständig programmgesteuert eintauchen.

Auch kann eine Einrichtung zum automatischen Wechseln der Kapillare 2 vorgesehen sein.

Bezugszeichen

| | |
|---|---|
| Prozeßlösungen | A, B |
| Konzentrationssolwerte von A, B | $A_{C(Soll)}$, $B_{C(Soll)}$ |
| Blase | Bl |
| Blasendruckdifferenz | $\Delta p$ |
| Meßflüssigkeit | Fl |
| Normflüssigkeit | $Fl_N$ |
| Prozeß-Flüssigkeitsgemisch | $Fl_P$ |
| Blasenhöhe | $h_B(t_{life})$ |
| Kapillare | K |
| Dosiermenge | M, M' |
| Radius der Kapillare | $R_{cap}$ |
| Blasenradius | $R(t_{life})$ |
| Oberflächenspannungen von A, B | $\sigma_A$, $\sigma_B$ |
| Zeit | t |
| Blasenvolumen | V |
| Sensorkopf | 1 |
| Kapillare | 2 |
| Öffnungen | 3 |
| Temperaturfühler | 4 |
| Hülle | 5 |
| Öffnungen | 6 |
| Meßflüssigkeit | 7 |

**Patentansprüche**

1. Verfahren zum Bestimmen der dynamischen Oberflächenspannung von Flüssigkeiten nach der Blasendruckmethode, wobei die zeitlichen Verläufe von Blasendruck $p(t_{life})$ und Blasenradius $R(t_{life})$ einer einzelnen Blase (Bl) zwecks Ermittlung der Oberflächenspannung $\sigma_s(t_{life})$ in Abhängigkeit von der Blasenlebensdauer ($t_{life}$) ausgewertet werden.

2. Verfahren nach Anspruch 1, wobei der zeitliche Verlauf des Blasendrucks $p(t_{life})$ aus dem zeitlichen Verlauf der Druckdifferenz $\Delta p(t_{life})$ zwischen dem Blasendruck $p(t_{life})$ und dem Minimaldruck $p_{min}$ nach der Beziehung: $\Delta p(t_{li\ fe}) = p(t_{life}) - p_{min}$ gewonnen wird.

3. Verfahren nach Anspruch 1, wobei der zeitliche Verlauf des Blasenradius $R(t_{life})$ indirekt aus dem zeitlichen Verlauf der Höhe $h_B(t_{life})$ der Blase (Bl) über einer Kapillare (K) und dem Radius ($R_{cap}$) dieser Kapillare (K) ermittelt wird.

4. Verfahren nach Anspruch 1, wobei der zeitliche Verlauf des Blasenradius $R(t_{life})$ indirekt aus dem zeitlichen Verlauf des Blasenvolumens $V(t_{life})$ und dem Radius ($R_{cap}$) einer Kapillare (K) ermittelt wird.

5. Verfahren nach Anspruch 1, wobei der zeitliche Verlauf des Blasenradius $R(t_{life})$ indirekt aus dem zeitlichen Verlauf des Gasvolumenstroms ($dV(t_{life})/dt$) und dem Radius ($R_{cap}$) einer Kapillare (K) ermittelt wird.

6. Verfahren nach einem der Ansprüche 1, 3 - 5, wobei der Radius ($R_{cap}$) einer Kapillare (K) aus einer Kalibriermessung mit einer Flüssigkeit bekannter Oberflächenspannung ($H_2O$) bei einer festen Blasenfrequenz oder einer festen Blasenlebensdauer (z.B. f = 1 Hz) bestimmt wird.

**7.** Verfahren nach einem der Ansprüche 1 bis 5, wobei die Oberflächenspannung $\sigma_s(t_{life})$ nach der Beziehung: $\sigma_s(t_{life}) = \Delta p(t_{life}) \cdot R(t_{life})/2$ ermittelt wird.

**8.** Verfahren zum online-Einstellen der Konzentration einer Flüssigkeit in Abhängigkeit ihrer Oberflächenspannung mit den Schritten:

1. Messen und Speichern der (Soll-) Oberflächenspannung $\sigma_{soll}$ einer kleinen Menge frisch angesetzter Lösung, enthaltend eine Prozeßflüssigkeit ($Fl_P$) "unbekannter" Zusammensetzung mit entsprechender Soll-Konzentration des Stoffes (X);
2. Messen der (Ist-) Oberflächenspannung $\sigma_{ist}$ der Prozeßflüssigkeit ($Fl_p$) und Ermittlung des Verhältnisses zum gespeicherten Oberflächenspannungs-Sollwert: $\sigma_{ist}/\sigma_{soll}$;
3. Bestimmen der notwendigen Dosiermenge (M) aus der normierten Kennlinie einer Normflüssigkeit ($Fl_N$) und dem Verhältnis $\sigma_{ist}/\sigma_{soll}$ und Dosieren des Stoffes (X) mit der ermittelten Dosiermenge (M) in die aktuelle Prozeßflüssigkeit ($Fl_P$);
4. Erneutes Messen der Oberflächenspannung der Prozeßflüssigkeit ($Fl_P$) und Bildung eines neuen Verhältnisses zum Sollwert;
5. Bestimmen einer weiteren Dosiermenge (M') aus der normierten Kennlinie der Normflüssigkeit ($Fl_N$) und dem neuen Verhältnis $\sigma_{ist}/\sigma_{soll}$ und Dosieren des Stoffes (X) mit der weiteren Dosiermenge (M') in die aktuelle Prozeßflüssigkeit ($Fl_P$).
6. Wiederholung der Verfahrensschritte 4. und 5. bis zum Verhältnis: $\sigma_{ist}/\sigma_{soll} = 1$ (+/- zulässige Toleranz).

**9.** Verfahren zum online-Einstellen der dynamischen Oberflächenspannung einer Flüssigkeit mit den Schritten:

1. Automatisches Messen der Oberflächenspannung bei verschiedenen Konzentrationen und Ermittlung der zugehörigen Oberflächenspannungs-Konzentrationskennlinie;
2. Ermittlung des Oberflächenspannungs-Grenzwertes anhand der Konzentrationskennlinie;
3. Berechnung des Oberflächenspannungs-Sollwertes durch Multiplikation des Grenzwertes mit einem Faktor oder Addition eines Summanden und Bestimmung der zugehörigen Dosiermenge anhand der Konzentrationskennlinie und 4. Automatische Zugabe der berechneten Dosiermenge.

**10.** Einrichtung zum Bestimmen oder Einstellen der dynamischen Oberflächenspannung einer Flüssigkeit nach dem Blasendruckverfahren, wobei eine von oben in die Meßflüssigkeit tauchende Kapillare (2) von einer Hülle (5) umgeben ist.

**11.** Einrichtung nach Anspruch 10, wobei die Hülle (5) an ihrer Unterseite geschlossen ist und an den Seiten Öffnungen (3, 6) besitzt.

**12.** Einrichtung zum Bestimmen oder Einstellen der dynamischen Oberflächenspannung einer Flüssigkeit nach dem Blasendruckverfahren, wobei in einer Gaszuführung zu einer Kapillare (2) Mittel zur Kondensations oder Trocknung oder Heizung des feuchten und kühlen Gases oder eine Kombination dieser Mittel liegen.

**13.** Einrichtung zum Bestimmen oder Einstellen der dynamischen Oberflächenspannung einer Flüssigkeit nach dem Blasendruckverfahren, wobei als Material für eine Kapillare (2) Polyether-Etherketon (PEEK) dient.

**14.** Einrichtung zum Bestimmen oder Einstellen der dynamischen Oberflächenspannung einer Flüssigkeit nach dem Blasendruckverfahren durch Vergleich zweier Flüssigkeiten, deren Oberflächenspannung nacheinander gemessen wird, wobei ein Probenbehälter zwei oder mehrere Flüssigkeitskammern zum Zwecke des gegenseitigen Temperierens der Flüssigkeiten aufweist.

**15.** Einrichtung nach Anspruch 14, wobei eine der Kammern eine Kalibrierflüssigkeit enthält.

**16.** Einrichtung nach Anspruch 14, wobei eine der Kammern eine Reinigungsflüssigkeit enthält.

**17.** Einrichtung nach Anspruch 14, wobei eine Kapillare (2) zu dem Probenbehälter relativ beweglich angeordnet ist.

**18.** Einrichtung nach Anspruch 14, wobei eine Kapillare (2) automatisch in jede Kammer (Probenkammer, Reinigungskammer) des Probenbehälters eintaucht.

**19.** Einrichtung nach einem der Ansprüche 10-14, wobei ein automatisches Wechseln der Kapillare (2) vorgesehen ist.

Δp [Pa]

t [s]

Fig. 1

EP 0 924 505 A2

Fig. 2

Fig. 3

V [1/1000 ml]

t [s]

Fig. 4

EP 0 924 505 A2

EP 0 924 505 A2

**Oberflächenspannung [mN/m]**

Fig. 5

## Verhältnis der Oberflächenspannungen Ist/Soll

Fig. 6

EP 0 924 505 A2

**Fig. 7**

EP 0 924 505 A2

Fig. 8